# EUROPEAN PATENT APPLICATION

(11) **EP 3 061 944 A1**
(43) Date of publication of application: **31.08.2016**
(21) Application number: 15156711.2
(22) Date of filing: 26.02.2015
(51) Int. Cl.: F02C 6/00, F02C 9/28, F02C 9/54

(54) **Method for controlling the operation of a gas turbine with sequential combustion**

(71) Applicant: General Electric Technology GmbH, 5400 Baden (CH)
(72) Inventor: Schesny, Andreas Jan, 8006 Zürich (CH); Schiessel, Pirmin, 5420 Ehrendingen (CH); Siewert, Piotr, 5417 Untersiggenthal (CH); Lüddecke, Torsten, 5400 Baden (CH); Dhital, Rajeshwor, 5420 Ehrendingen (CH)
(74) Representative: Bernotti, Andrea

(57) **Abstract**

The invention relates to a method for controlling the operation of a gas turbine (10) with sequential combustion, which gas turbine (10) comprises a compressor (12) with variable inlet guide vanes (VIGV), a first combustor (13), a high-pressure turbine (14) downstream of said first combustor (13), a second combustor (16) downstream of said high-pressure turbine (14), and a low-pressure turbine (17) downstream of said second combustor (16)

A prevention of exceeding targeted NOx emission limits as well as a prevention of component stress increase is achieved by adjusting an average TAT1 temperature (TAT1 AVG), if at least one local TAT1 measurement value is increasing above a predetermined threshold value during base load operation.

## Description

### TECHNICAL FIELD

The present invention relates to the technology of gas turbines. It refers to a method for controlling the operation of a gas turbine with sequential combustion.

### PRIOR ART

The control of gas turbines with sequential combustion has been the object of various documents in the past.

For example, document US 8,434,312 teaches a method for the low-CO emissions part load operation of a gas turbine with sequential combustion, whereby the air ratio ([lambda]) of the operative burners of the second combustor is kept below a maximum air ratio ([lambda]max) at part load. In order to reduce the maximum air ratio ([lambda]), a series of modifications in the operating concept of the gas turbine are carried out individually or in combination. One modification is an opening of the row of variable compressor inlet guide vanes (VIGV) before engaging the second combustor. For engaging the second combustor, the row of variable compressor inlet guide vanes is quickly closed and fuel is introduced in a synchronized manner into the burner of the second combustor. A further modification is the deactivating of individual burners at part load.

Document EP 2 600 063 A2 discloses a method of operating a gas turbine with staged and/or sequential combustion, in which the burners of a second stage or a second combustor are sequentially switched on during loading and switched off during de-loading, whereby the total fuel mass flow and the compressor inlet guide vanes are adjusted at the same time to allow controlling gas turbine operation temperatures and engine power with respect to the required CO emission target.

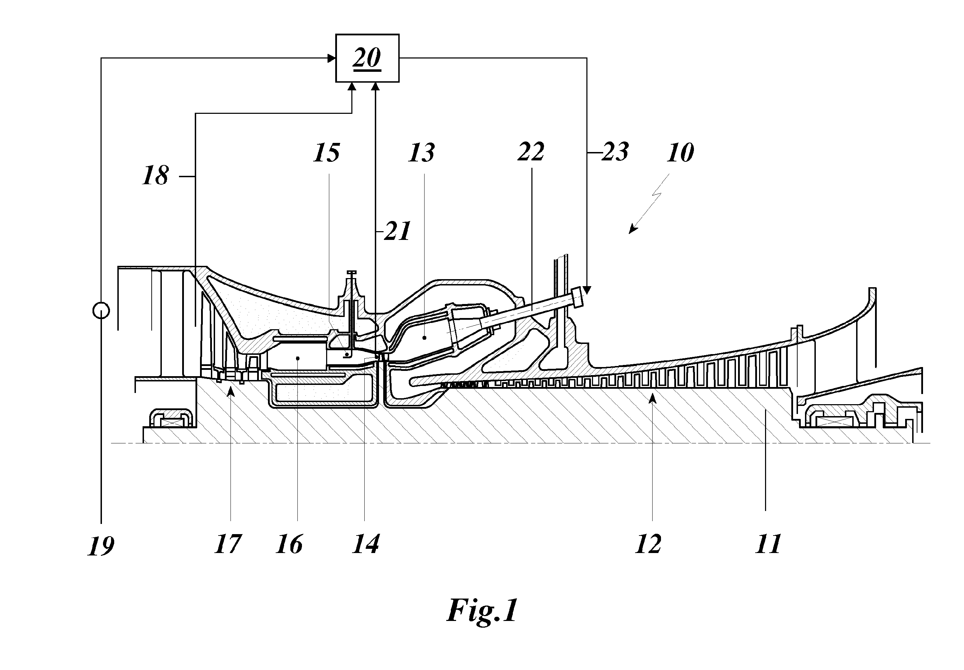

A basic control scheme of a gas turbine with sequential combustion (GT26 or the like) is shown in Fig. 1: The gas turbine 10 comprises a rotor 11, which is surrounded by a concentric casing. A compressor 12 compresses air that enters a first combustor 13 with first so-called EV burners 22 through a plenum. The resulting hot gas drives a first or high-pressure turbine 14. Downstream of high-pressure turbine 14 second so-called SEV burners 15 inject fuel into the gas, which still contains air, reheating the gas in a second combustor 16. The re-heated gas drives a second or low-pressure turbine 17 and finally exits the gas turbine 10.

A controller 20, which controls the operation of gas turbine 10, receives a TAT1 measurement 21 with the turbine outlet temperature TAT1 of high-pressure turbine 14 being measured at various (e.g. 24) points at the outlet of high-pressure turbine 14. Furthermore, it receives a TAT2 measurement 18 with the turbine outlet temperature TAT2 of low-pressure turbine 17 being measured at various points at the outlet of low-pressure turbine 17. Finally, it receives NOx emission data from a NOx CEMS measuring means 19 placed in the exhaust gas flow of gas turbine 10.

Using the measured data, controller 20 controls the operation of the first combustor 13 by means of an EV burner control 23.

For gas turbines with sequential combustion of the type shown in Fig. 1 the TAT1 measurement 21, i.e. the measurement of the turbine outlet temperature TAT of the (first) high-pressure turbine 14, is influenced by leakages.

These leakages are small for a new and clean engine (or an engine reassembled after an outage) but increase during operation.

These leakages affect some of the single TAT1 measurements, which are averaged to give an average TAT1 temperature TAT1 AVG, because the respective temperature sensors are influenced by cold leakage flow causing a measurement error, i.e. signaling a lower temperature.

The controller then increases the fuel flow to keep the TAT1 (respectively the turbine inlet temperature TIT1 of high-pressure turbine 14) at the design temperature. Because of the measurement error the actual TAT1 and actual TIT1 values increase leading to higher NOx emissions (and increased life time consumption of the machine).

Readjusting the engine after a significant increase in NOx emissions has been detected may solve the problem. However, this solution is cumbersome, unsatisfactory for the operator of the machine, and affects component lifetime.

A better way would be to use an advanced closed loop control with continuous emission and possibly pulsation feedback loops.

### DISCLOSURE OF THE INVENTION

It is an object of the invention to provide a method for controlling the operation of a gas turbine with sequential combustion, which avoids the drawbacks of prior approaches and allows preventing the exceeding of targeted NOx emission limits as well as a component stress increase.

This and other objects are obtained by a method as claimed in Claim 1.

The method according to the invention is used for controlling the operation of a gas turbine with sequential combustion, which gas turbine comprises a compressor with variable inlet guide vanes, a first combustor, a high-pressure turbine downstream of said first combustor, a second combustor downstream of said high-pressure turbine, and a low-pressure turbine downstream of said second combustor.

The method according to the invention comprises the steps of:
verifying that the gas turbine operates under base load conditions;
continuously measuring locally at various points the turbine outlet temperature TAT1 of the high-pressure turbine;
averaging over the various local TAT1 measurement values to get an average TAT1 temperature (TAT1 AVG);
controlling the operation of the first combustor in dependence of said average TAT1 temperature (TAT1 AVG);
checking if at least one local TAT1 measurement value, which is higher than said average TAT1 temperature (TAT1 AVG), is increasing;
adjusting said average TAT1 temperature (TAT1 AVG), if said at least one local TAT1 measurement value is increasing above a predetermined threshold value.

According to an embodiment of the inventive method said base load conditions comprise said variable inlet guide vanes to be open, a turbine inlet temperature of said first combustor being at a base load value, and a turbine inlet temperature of said second combustor being at a base load value.

According to another embodiment of the inventive method the moving average of a plurality of local TAT1 measurement values, which are higher than said average TAT1 temperature (TAT1 AVG), is checked, and said average TAT1 temperature (TAT1 AVG) is adjusted, if said moving average is increasing above a predetermined threshold value.

Specifically, according to one embodiment the largest local TAT1 measurement value of said moving average can be neglected. According to a further embodiment a plurality of TAT1 measurements, higher than the TAT1 AVG, are neglected.

Specifically, said moving average can for example be evaluated on a time scale of 10 minutes or longer.

More specifically, said moving average can be evaluated on a time scale of 20 minutes.

According to yet a further embodiment of the inventive method said predetermined threshold value is at least 5 K above a local TAT1 reference value. The local TAT1 reference value can for example be the average of the at least one local TAT1 measurement value at the beginning of an operating period when the gas turbine was adjusted. Alternatively the local TAT1 reference value can be a relative value, determined by the difference of the at least one local TAT1 measurement value towards the TAT1 AVG during base load operation at the beginning of the operation period. So instead of triggering an TAT1 adjustment when an absolute temperature of the at least one local TAT1 measurement value is reached, the TAT1 adjustment is triggered when the difference between the at least one local TAT1 measurement value and the TAT1 AVG exceeds the reference value, i.e. a temperature difference. By using a temperature difference possible changes in the target value for the TAT1 AVG due to changes in the operating concept have no influence on the TAT1 adjustment. The target TAT1, respectively the target turbine inlet temperature TIT1 can for example be changed to take into account changes in the fuel composition of fuel type, e.g. use of fuel gas or fuel oil.

Specifically, said predetermined threshold value can for example be 10 K above a local TAT1 reference value.

According to just another embodiment of the inventive method said adjusting of the average TAT1 temperature (TAT1 AVG) is done by stepwise decreasing said average TAT1 temperature (TAT1 AVG) by a predetermined amount. The actual TAT1 temperature (TAT1 AVG) can for example be reduced by adding an offset to the measured value in the controller. Thus the controller uses an increased value of TAT1 AVG for controlling the operation of the first combustor. Since the target control values are unchanged the controller will reduce the fuel flow to reduce the temperatures after offset to the target values.

According to a further embodiment of the inventive method the NOx content of the exhaust gases of the gas turbine is measured by NOx CEMS measuring means, and said average TAT1 temperature (TAT1 AVG) is only adjusted, if in addition the moving average of the NOx CEMS emission measurement values is above a predetermined threshold value.

Specifically, said moving average of the NOx CEMS emission measurement values can for example be evaluated on a time scale of 20 minutes, and said threshold value can for example be at 80% of guaranteed NOx emission level.

Specifically, according to a further embodiment the pressure pulsations are measured in said first combustor, and said average TAT1 temperature (TAT1 AVG) is only adjusted, if in addition the low frequency part of said measured pressure pulsations, especially in the frequency band between 100 Hz and 150 Hz, are below a predetermined threshold value, of especially 30 mbar.

More specifically, said average TAT1 temperature (TAT1 AVG) can only be adjusted, if all said adjustment criteria are fulfilled for a predetermined number of separate base load cycles and a predetermined time of operation.

Especially, said predetermined number of separate base load cycles can for example be at least 5, and that said predetermined time of operation can for example be at least 120 minutes.

### BRIEF DESCRIPTION OF THE DRAWINGS

The present invention is now to be explained more closely by means of different embodiments and with reference to the attached drawing.
- Fig. 1: shows a gas turbine with sequential combustion and a closed loop control circuit for its operation.

### WAYS OF CARRYING OUT THE INVENTION

The present invention is related to an Active TAT1 Control (ATC), which is a semiautomatic control logic adaption to improve the closed loop control of the first (EV) combustor of a gas turbine with sequential combustion like the already mentioned GT26. The ultimate goal is to keep the NOx emissions from reaching guaranteed upper limits.

This is done by adapting the average turbine outlet temperature of the (first) high-pressure turbine 14, i.e. TAT1 AVG, as a process control temperature. Linear regression analysis of an actual GT26 turbine showed that the average of the hottest 8 of actual 24 TAT1 measurements is able to indicate a mismatch between the measured NOx emissions and the controlled TAT1 AVG on base load. According to an embodiment of the invention the hottest 8 TAT1 measurements averaged over 20 minutes are used as an indicator to correct first (EV) combustor closed loop control disturbances, as for example EV hot gas temperature deviation, and thereby keep NOx emissions at the guaranteed level.

The final control logic design within controller 20 in this special case performs a semiautomatic, stepwise decrease of the EV process control temperature TAT1 AVG by 10 Kelvin on base load, after fulfilling 5 different criteria sequentially:
1. GT base load conditions are given:
2. The 20 minutes moving average of the hottest 8 TAT1 measurement values increased by 10 Kelvin relative to a reference measurement;
3. The 20 minutes moving average of the NOx OEMS emission measurement values is above 80% of guaranteed value.
4. The 100 Hz - 150Hz pulsation band of the first combustor 13 is below a pressure of 30 mbar.
5. Conditions 1,2,3,4 are fulfilled for 5 separate times of base load operation and for 120 minutes.

If the final 5th criterion is fulfilled the release of the ATC is given and can be activated by the operator.

The meaning of the criteria 1-5 listed above will be explained in more detail below:

### Re Criteria 1:

Base load conditions are given, if the variable inlet guide vanes (VIGV) are open (within 1° to a base load opening), the turbine inlet temperature TIT1 at the first combustor is at base load TIT1, and the turbine inlet temperature TIT2 at the second combustor is at a base load TIT2.

### Re Criteria 2:

In general, it has to be checked if at least one local TAT1 measurement value which is higher than TAT1 AVG (there are normally 24 local TAT1 measurements in a GT26) is increasing. If it is increasing above a threshold value (e.g. 10 K, could also be 5 K) the TAT1 AVG value is adjusted.

Only the TAT1 AVG is adjusted. The TAT2 AVG which is measured downstream of the low-pressure turbine 17, is not adjusted (there is no cooling in the exhaust duct downstream of low-pressure turbine 17, and thus no potential change due to cooling air leakage).

The time period can be of course shorter than 20 minutes, e.g. only 10 minutes or longer.

One or all TAT1 measurement values could be used (for example the moving average of any number of TAT1 measurements which are higher than the average could be used; further, for example the hottest local TAT1 measurement value could be neglected).

### Re Criteria 3:

The time period of 20 minutes is one example. The time period could be shorter or longer. The same is true for the 80%-value NOx emission.

### Re Criteria 4:

The 100 Hz - 150Hz pulsation band of the first combustor 13 is also called "low frequency pulsations" or "lean blow off pulsation".

### Re Criteria 5:

"5 separate times of base load operation" means that the gas turbine should be deloaded between consecutive base load operations to a load below base load -of course only in this embodiment.

Furthermore, the adjustment can also be done automatically, i.e. it does not have to be done by an operator.

### The advantages of the inventive method are:

Especially on engines with many starts a faster propagation of the TAT1 Shift can be observed. The current solution only reacts as engine operator raises concerns because guaranteed or environmental NOx emission limits are exceeded. The advantage of the invention is a prevention of exceeding targeted NOx emission limits as well as a prevention of component stress increase.

### LIST OF NUMERALS

- 10: gas turbine
- 11: rotor
- 12: compressor
- 13: combustor
- 14: high-pressure turbine (TAT1)
- 15: SEV burner
- 16: combustor
- 17: low-pressure turbine (TAT2)
- 18: TAT2 measurement(s)
- 19: NOx CEMS measuring means
- 20: controller
- 21: TAT1 measurement(s)
- 22: EV burner
- 23: EV burner control

## Claims

1. Method for controlling the operation of a gas turbine (10) with sequential combustion, which gas turbine (10) comprises a compressor (12) with variable inlet guide vanes (VIGV), a first combustor (13), a high-pressure turbine (14) downstream of said first combustor (13), a second combustor (16) downstream of said high-pressure turbine (14), and a low-pressure turbine (17) downstream of said second combustor (16), said method comprising the steps of:
verifying that the gas turbine (10) operates under base load conditions;
continuously measuring locally at various points the turbine outlet temperature TAT1 of the high-pressure turbine (14);
averaging over the various local TAT1 measurement values to get an average TAT1 temperature (TAT1 AVG);
controlling the operation of the first combustor (13) in dependence of said average TAT1 temperature (TAT1 AVG);
checking if at least one local TAT1 measurement value, which is higher than said average TAT1 temperature (TAT1 AVG), is increasing;
adjusting said average TAT1 temperature (TAT1 AVG), if said at least one local TAT1 measurement value is increasing above a predetermined threshold value.

2. Method as claimed in Claim 1, **characterized in that** said base load conditions comprise said variable inlet guide vanes (VIGV) to be open, a turbine inlet temperature (TIT1) of said first combustor (13) being at a base load value, and a turbine inlet temperature (TIT2) of said second combustor (16) being at a base load value.

3. Method as claimed in Claim 1, **characterized in that** the moving average of a plurality of local TAT1 measurement values, which are higher than said average TAT1 temperature (TAT1 AVG), is checked, and said average TAT1 temperature (TAT1 AVG) is adjusted, if said moving average is increasing above a predetermined threshold value.

4. Method as claimed in Claim 3, **characterized in that** the largest local TAT1 measurement value of said moving average is neglected.

5. Method as claimed in Claim 3, **characterized in that** said moving average is evaluated on a time scale of 10 minutes or longer.

6. Method as claimed in Claim 5, **characterized in that** said moving average is evaluated on a time scale of 20 minutes.

7. Method as claimed in Claim 1, **characterized in that** said predetermined threshold value is at least 5 K above a local TAT1 reference value.

8. Method as claimed in Claim 7, **characterized in that** said predetermined threshold value is 10 K above a local TAT1 reference value.

9. Method as claimed in Claim 1, **characterized in that** said adjusting of the average TAT1 temperature (TAT1 AVG) is done by stepwise decreasing said average TAT1 temperature (TAT1 AVG) by a predetermined amount.

10. Method as claimed in Claim 3, **characterized in that** the NOx content of the exhaust gases of the gas turbine (10) is measured by NOx CEMS measuring means (19), and that said average TAT1 temperature (TAT1 AVG) is only adjusted, if in addition the moving average of the NOx CEMS emission measurement values is above a predetermined threshold value.

11. Method as claimed in Claim 10, **characterized in that** said moving average of the NOx CEMS emission measurement values is evaluated on a time scale of 20 minutes, and said threshold value is at 80% of guaranteed NOx emission level.

12. Method as claimed in Claim 10, **characterized in that** pressure pulsations are measured in said first combustor (13), and that said average TAT1 temperature (TAT1 AVG) is only adjusted, if in addition the low frequency part of said measured pressure pulsations, especially in the frequency band between 100 Hz and 150 Hz, are below a predetermined threshold value, of especially 30 mbar.

13. Method as claimed in Claim 12, **characterized in that** said average TAT1 temperature (TAT1 AVG) is only adjusted, if all said adjustment criteria are fulfilled for a predetermined number of separate base load cycles and a predetermined time of operation.

14. Method as claimed in Claim 13, **characterized in that** said predetermined number of separate base load cycles is at least 5, and that said predetermined time of operation is at least 120 minutes.
